# FASCICULE DE BREVET EUROPEEN

(11) **EP 2 053 180 B1**
(45) Date de publication et mention de la délivrance du brevet: **18.12.2013**
(21) Numéro de dépôt: 07119027.6
(22) Date de dépôt: 22.10.2007
(51) Int. Cl.: E04F 21/22

(54) **Un plot**
Eine Stütze
Support

(43) Date de publication de la demande: 29.04.2009
(73) Titulaire: BUZON Pedestal International s.a., 4040 Herstal (BE)
(72) Inventeur: Buzon, Claude, c/o Buzon Pedestal International s.a., 4040 Herstal (BE)
(74) Mandataire: Quintelier, Claude

(56) Documents cités:
- FR-A- 1 303 271
- GB-A- 985 148
- US-A- 3 888 064
- US-A1- 2004 035 064

## Description

La présente invention se rapporte à un plot pour permettre l'élévation d'une surface de construction par rapport au sol, ledit plot comprenant au moins un premier et un deuxième élément, lequel premier élément comprend un premier corps monté sur une base destinée à être posée sur ledit sol, lequel deuxième élément comprend un deuxième corps, chacun des corps étant pourvus d'un pas de vis pour mutuellement s'engager l'un dans l'autre formant ainsi un corps interne et un corps externe.

De tels plots sont connus de la demande de brevet américain US 5 588 264. Les plots décrits dans cette demande de brevet comprennent au moins deux éléments chacun pourvus d'un pas de vis pour mutuellement s'engager l'un dans l'autre. Les éléments forment un support pour une surface de construction. En faisant tourner l'un élément par rapport à l'autre élément, la hauteur du plot est ajustable, ce qui permet de compenser la différence en hauteur entre la surface de construction et le sol.

Un plot selon le préambule de la revendication 1 est connu du Document US-A-20040035064.

Un problème des plots connus est qu'après ajustement de la hauteur, les éléments peuvent encore bouger l'un par rapport à l'autre, faussant ainsi l'ajustement. Les éléments peuvent par exemple bouger et perdre leur ajustement à cause de vibrations encourus durant leur transport. Cela a pour conséquence que la hauteur réelle n'est plus égale à la hauteur à laquelle le plot a été ajusté.

La présente invention a pour objet de réaliser un plot qui permet, après ajustement, d'empêcher le mouvement de l'un élément par rapport à l'autre et cela de façon simple et fiable.

A cette fin, un plot selon l'invention est caractérisé en ce que l'organe de verrouillage comprend un premier et un deuxième segment, ledit premier segment étant pourvu pour traverser ledit orifice et s'insérer entre deux rainures successives du pas de vis du corps interne, le pas de vis du corps externe étant interrompu à hauteur de l'orifice pour créer un espace aménagé dans une paroi interne du corps externe ledit deuxième segment étant pourvu pour traverser ledit orifice et s'intercaler dans l'espace. L'usage de l'organe de verrouillage permet de remédier au fait que les éléments bougent l'un par rapport à l'autre. En effet dû au fait que le premier segment est inséré entre deux rainures successives et traverse l'orifice, les deux éléments sont bloqués l'un par rapport à l'autre. Ainsi l'alignement en hauteur est maintenu. L'organe de verrouillage permet ainsi de façon simple et fiable un maintient de la hauteur ajustée.

De préférence, ledit espace comporte une surface dont l'épaisseur va en s'accroissant, ledit deuxième segment étant agencé pour prendre prise par rotation sur cette surface après que l'organe de verrouillage a été introduit dans l'orifice. L'avantage de cette surface est qu'en combinaison avec la rotation de l'organe de verrouillage, elle contribue à transformation cette rotation en un déplacement axiale du premier segment. Ainsi le deuxième segment sera poussé dans la direction du corps interne et entraînera le premier segment entre deux rainures successives du pas de vis.

L'invention sera maintenant décrite plus en détails à l'aide des dessins illustrant une forme de réalisation préférentielle du plot suivant l'invention. Dans les dessins :
la figure 1 illustre un plot selon l'invention ;
la figure 2 illustre l'organe de verrouillage ; et
la figure 3 illustre un détail de la face interne du corps externe situé à hauteur de l'orifice.

Dans les dessins une même référence a été attribuée à un même élément ou à un élément analogue.

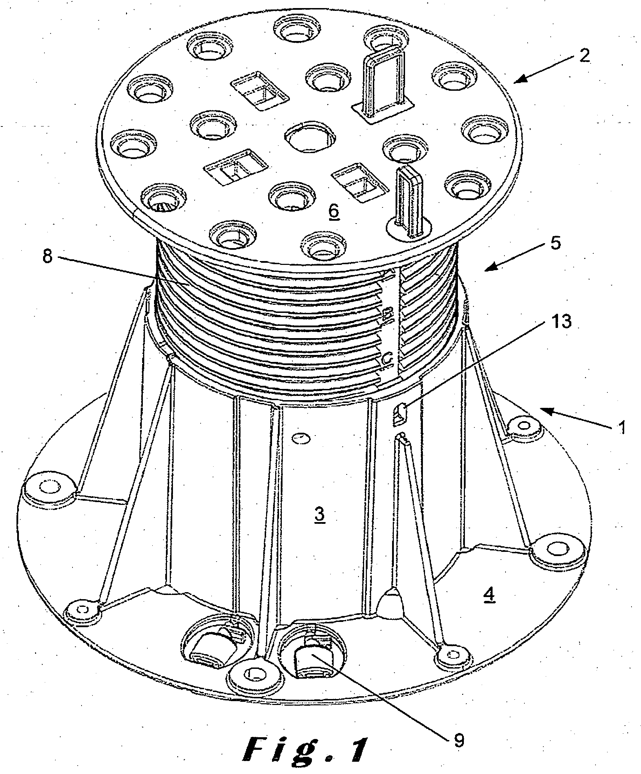

La figure 1 illustre une forme de réalisation d'un plot selon l'invention. Ce plot comprend un premier élément 1 et un deuxième élément 2. Le premier élément 1 comprend un premier corps 3 monté sur une base 4 destinée à être posée sur le sol. Le deuxième élément 2 comprend un deuxième corps 5 pourvu en sa partie supérieure d'une surface 6. Cette surface 6 sert de support à des éléments de pavement comme par exemple des dalles ou autres. Le premier corps 3 est pourvu d'un pas de vis 7 appliqué à l'intérieur du corps 3. Le deuxième corps 5 est pourvu d'un pas de vis 8 appliqué à l'extérieur du corps 5. Les deux pas de vis 7 et 8 sont formés de telle façon à pouvoir mutuellement s'engager l'un dans l'autre, de façon à déplacer le premier et le deuxième corps par rapport à eux même. Ainsi le deuxième corps 5 forme un corps interne 5 et le premier corps 3 forme un corps externe 3 du plot.

L'invention est toutefois nullement limitée à un plot comprenant deux éléments et s'applique aussi à des plots comprenant des éléments intermédiaires munis d'un pas de vis. Evidemment il est possible de pourvoir le premier corps 3 d'un pas de vis appliqué à l'extérieur et le deuxième corps 5 d'un pas de vis appliqué à l'intérieur.

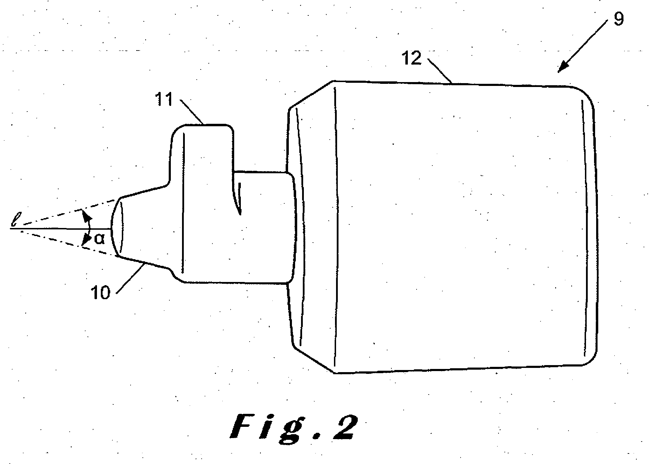

Le plot comprend également un organe de verrouillage 9. Comme illustré à la figure 2, l'organe de verrouillage comprend un premier segment 10, un deuxième segment 11 et un segment de prise 12. Dans l'exemple de réalisation le premier segment 10 forme l'une extrémité de l'organe de verrouillage alors que le segment de prise 12 forme l'autre extrémité. Le deuxième segment étant situé entre le premier segment et le segment de prise et s'étend perpendiculairement à l'axe I de l'organe de verrouillage. Le premier segment 10 est pourvu pour s'insérer entre deux rainures successives du pas de vis 8 du corps interne 5. Le deuxième segment 11 est pourvu pour s'intercaler dans un espace aménagé dans une paroi interne du corps externe 3 comme il sera décrit plus en détail ci-dessous. Dans ce mode de réalisation, le segment de prise 12 est formé par une poignée. Il est également possible que le segment de prise 12 soit formé par un élément femelle d'un six pans, ou tout autre éléments permettant de manipuler l'organe de verrouillage.

L'organe de verrouillage 9 peut être logé dans la base 4, comme illustré dans la figure 1, de telle façon à ce que l'organe de verrouillage 9 peut y être délogé avant utilisation. Ceci facilite la fabrication pour moulage d'un plot suivant l'invention.

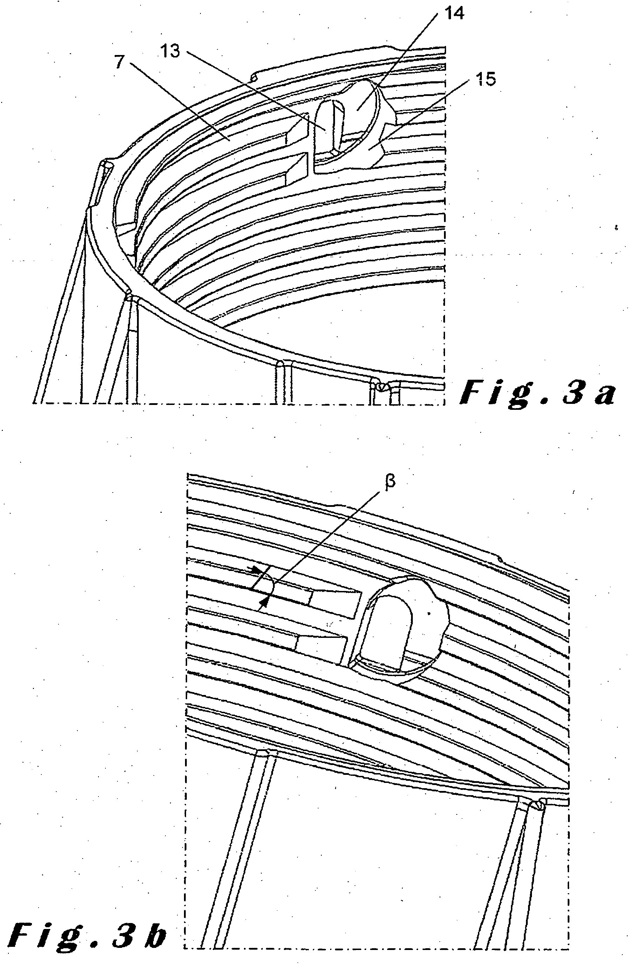

Le corps externe 3 comprend également un orifice 13 situé dans la paroi de ce corps et traversant ce dernier. L'orifice 13 donne accès au pas de vis 8 du corps interne 5. L'orifice 13 est orienté dans le sens de la hauteur du plot et perpendiculairement au pas de vis 7 et 8. Comme illustré à la figure 3, à hauteur de l'orifice, le pas de vis est interrompu pour créer ainsi un espace 15 aménagé dans une paroi interne du corps externe. Cet espace comporte une surface 14. L'épaisseur de cette surface 14 s'accroît du bas vers le haut. La surface 14 permet ainsi au deuxième segment d'y prendre prise, après que l'organe de verrouillage 9 a été introduit dans l'orifice.

Pour introduire l'organe de verrouillage 9 dans l'orifice 13, l'organe de verrouillage doit être orienté de telle façon à ce que le premier segment 10 pointe dans la direction du corps 3, et le deuxième segment 11 soit orienté vers la base 4. A force de pénétrer dans l'orifice, le premier segment 10 va venir se glisser entre deux rainures successives du pas de vis 8. Lorsque le premier et deuxième segment ont traversé l'orifice 13, l'organe de verrouillage 9 est entraîne en rotation par un utilisateur. Par cette rotation, le deuxième segment va entrer en contact avec la surface 14. Puisque cette surface va en s'accroissant, le deuxième segment sera poussé dans la direction du corps interne et fera glisser davantage le premier segment entre deux rainures successives du pas de vis.

Lorsqu'il est situé entre les rainures du pas de vis, le premier segment 10 pointe dans une direction perpendiculaire par rapport à sens de ce pas de vis 8. L'organe de verrouillage 9, après être été serré contre la surface 14, reste calé sur cette dernière. Quand l'organe de verrouillage 9 est en position de verrouillage, il y a donc une friction entre le premier segment 10 et deux rainures successives du pas de vis 8.

Le pas de vis 8 du corps interne 5 possède filet trapézoïdal avec un angle au sommet α, et le premier segment 10 possède une forme d'un cône tronqué avec un angle au sommet β. Pour provoquer une friction optimale, l'angle au sommet α est de préférence sensiblement égal à l'angle au sommet β. Par cette friction, l'organe de verrouillage 9 bloque le mouvement du corps interne 5 par rapport au corps externe 3. De cette façon, l'organe de verrouillage 9 permet de verrouiller de façon adéquate le mouvement d'un premier élément 1 par rapport à un deuxième 2.

## Revendications

1. Plot pour permettre l'élévation d'une surface de construction par rapport au sol, ledit plot comprenant au moins un premier (1) et un deuxième (2) élément, lequel premier élément comprend un premier corps (3) monté sur une base (4) destinée à être posée sur ledit sol, lequel deuxième élément comprend un deuxième corps (5), chacun des corps étant pourvus d'un pas de vis (7,8) pour mutuellement s'engager l'un dans l'autre formant ainsi un corps interne et un corps externe, ledit corps externe étant pourvu d'un orifice (13) donnant accès au pas de vis du corps interne, ledit plot comprenant également un organe de verrouillage (9) agencé pour verrouiller le mouvement du premier corps par rapport au deuxième corps en une pluralité de positions, **caractérisé en ce que** l'organe de verrouillage comprend un premier (10) et un deuxième (11) segment, ledit premier segment étant pourvu pour traverser ledit orifice et s'insérer entre deux rainures successives du pas de vis du corps interne, le pas de vis du corps externe étant interrompu à hauteur de l'orifice pour créer un espace (15) aménagé dans une paroi interne du corps externe, ledit deuxième segment étant pourvu pour traverser ledit orifice et s'intercaler dans ledit espace.

2. Le plot selon la revendication 1, **caractérisé en ce que** ledit espace comporte une surface (14) dont l'épaisseur va en s'accroissant, ledit deuxième segment (11) étant agencé pour prendre prise par rotation sur cette surface après que l'organe de verrouillage(9) a été introduit dans l'orifice (13).

3. Le plot selon la revendication 1 ou 2, **caractérisé en ce que** ledit pas de vis du corps interne possède filet trapézoïdal avec un angle au sommet (α), ledit premier segment ayant la forme d'un cône tronqué avec un angle au somme (β), ledit angle au sommet (α) étant sensiblement égal à l'angle au sommet (β), ledit pas de vis et ledit premier segment étant formés de telle façon à ce que ledit premier segment s'insère dans ledit pas de vis provoquant ainsi une friction entre eux.

4. Le plot selon l'une des revendications 1 à 3, **caractérisé en ce que** ledit orifice (13) est orienté dans le sens de la hauteur et perpendiculairement au pas de vis.

5. Le plot selon l'une des revendications 1 à 4, **caractérisé en ce que** l'organe de verrouillage (9) est logé dans ladite base de telle façon à ce que l'organe de verrouillage peut y être délogé avant utilisation.

## Patentansprüche

1. Gestell, um das Anheben einer Baufläche in Bezug zum Boden zu ermöglichen, wobei das Gestell mindestens ein erstes (1) und ein zweites Element (2) umfasst, wobei das erste Element einen ersten Körper (3) umfasst, der auf einer Basis (4) montiert ist, die dazu bestimmt ist, auf den Boden gestellt zu werden, wobei das zweite Element einen zweiten Körper (5) umfasst, wobei jeder der Körper mit einem Schraubengang (7, 8) versehen ist, um wechselseitig ineinander einzugreifen, wodurch ein innerer Körper und ein äußerer Körper gebildet werden, wobei der äußere Körper mit einer Öffnung (13) versehen ist, die Zugang zum Schraubengang des inneren Körpers gewährt, wobei das Gestell auch ein Verriegelungselement (9) umfasst, das derart vorgesehen ist, um die Bewegung des ersten Körpers in Bezug zum zweiten Körper in einer Vielzahl von Positionen zu verriegeln, **dadurch gekennzeichnet, dass** das Verriegelungselement ein erstes (10) und ein zweites Segment (11) umfasst, wobei das erste Segment dazu vorgesehen ist, durch die Öffnung hindurchzugehen und sich zwischen zwei aufeinanderfolgende Rillen des Schraubengangs des inneren Körpers einzusetzen, wobei der Schraubengang des äußeren Körpers auf Höhe der Öffnung unterbrochen ist, um einen Raum (15) zu erzeugen, der in einer Innenwand des äußeren Körpers vorgesehen ist, wobei das zweite Segment dazu vorgesehen ist, durch die Öffnung hindurchzugehen und sich in dem Raum anzuordnen.

2. Gestell nach Anspruch 1, **dadurch gekennzeichnet, dass** der Raum eine Fläche (14) umfasst, deren Dicke stetig zunimmt, wobei das zweite Segment (11) derart angeordnet ist, dass es durch Drehung auf dieser Fläche in Eingriff gelangt, nachdem das Verriegelungselement (9) in die Öffnung (13) eingeführt wurde.

3. Gestell nach Anspruch 1 oder 2, **dadurch gekennzeichnet, dass** der Schraubengang des inneren Körpers ein Trapezgewinde mit einem Winkel an der Spitze (α) besitzt, wobei das erste Segment die Form eines Kegelstumpfes mit einem Winkel an der Spitze (β) hat, wobei der Winkel an der Spitze (α) im Wesentlichen gleich dem Winkel an der Spitze (β) ist, wobei der Schraubengang und das erste Segment derart ausgebildet sind, dass sich das erste Segment in den Schraubengang einsetzt, was somit zu einer Reibung zwischen ihnen führt.

4. Gestell nach einem der Ansprüche 1 bis 3, **dadurch gekennzeichnet, dass** die Öffnung (13) in Richtung der Höhe und senkrecht auf den Schraubengang ausgerichtet ist.

5. Gestell nach einem der Ansprüche 1 bis 4, **dadurch gekennzeichnet, dass** das Verriegelungselement (9) in der Basis angeordnet ist, so dass das Verriegelungselement hier vor der Verwendung ausgelagert werden kann.

## Claims

1. A pedestal for enabling the elevation of a construction surface with respect to a ground, said pedestal comprising at least a first (1) and a second (2) element, which first element comprises a first body (3) mounted on a basis provided to be placed on said ground, which second element comprises a second body (5), each of said bodies being provided with a screw thread (7,8) for mutual engagement with each other and thereby forming an internal body and an external body, which external body being provided with an opening (13) giving access to the screw thread of the internal body, which pedestal also comprises a locking member (9) provided for locking the movement of the first body with respect to the second body in a plurality of positions, **characterised in that** the locking member comprises a first (101) and a second (11) segment, said first segment being provided for crossing said opening and insert between two subsequent grooves of the screw thread of the internal body, the screw thread of the external body being interrupted at the level of the opening for creating a space (15) applied in an internal wall of the external body, said second segment being provided for crossing said opening and fitting into said space.

2. The pedestal according to claim 1, **characterized in that** said space comprises a surface (14) the thickness of which increases, said second segment (11) being provided for gripping by rotation on said surface after that the locking member (9) has been introduced in the opening (13).

3. The pedestal according to claim 1 or 2, **characterized in that** said screw thread of the internal body comprises a trapezoidal thread with an angle at the top (α), said first segment having the form of a truncated cone with an angle at the top (β), said angle at the top (α) being substantially equal to the angle at the top (β), said screw thread and said first segment being formed in such a manner that said first segment inserts in said screw thread thereby causing a friction between them.

4. The pedestal according to any one of the claims 1 to 3, **characterized in that** said opening (13) is oriented in the height direction and perpendicular to the screw thread.

5. The pedestal according to any one of the claims 1 to 4, **characterized in that** the locking member (9) is lodged in said basis in such a manner that the locking member can be removed before use.
